# EUROPEAN PATENT APPLICATION

(11) **EP 2 068 227 A1**
(43) Date of publication of application: **10.06.2009**
(21) Application number: 08250814.4
(22) Date of filing: 10.03.2008
(51) Int. Cl.: G06F 1/16

(54) **Portable computer**

(30) Priority: 16.11.2007 CN 200710202576
(71) Applicant: Hon Hai Precision Industry Co., Ltd., Tu-cheng City, Taipei Hsien (TW)
(72) Inventor: Chuang, Ping-Yang, Tu-Chen City Taipei Hsien (TW)
(74) Representative: Craven, Ian

(57) **Abstract**

A portable computer includes a first display, a second display, an interconnection portion, and a controller module. The interconnection portion rotatably connects the first and second displays to each other. At least one of the first and second displays is capable of sensing operations of users and generating sensor signals according to the operations. The controller module is used for driving the displays, and receiving the sensor signals.

## Description

The present invention generally relates to personal computers. Particularly, the present invention relates to a portable personal computer.

Some portable computers, such as notebook computers and laptop computers, have small bodies to be conveniently carried and used anywhere they go. Other portable computers, such as personal digital assistants (PDAs) have rather smaller bodies to be more conveniently carried, but some functions that can be accomplished by the notebook computers or the laptop computers are sacrificed.

An ultra mobile personal computer (UMPC) has a smaller body than the notebook computers and the laptop computers, while being slightly larger than the PDAs. Popularly, the UMPC has a 7-inch screen. Meanwhile, hardware of the UMPC is similar to that of the notebook computers or the laptop computers. Therefore, the UMPC can have as many functions as the notebook computers or the laptop computers while still being convenient to carry like the PDAs. However, a popular UMPC has a keyboard that occupies a rather large volume, which is a disadvantage.

In one embodiment, a portable computer includes a first display, a second display, an interconnection portion, and a controller module. The first and second displays are rotatably connected to each other by the interconnection portion. At least one of the first and second displays is capable of sensing operations of users and generating sensor signals according to the operations. The controller module is used for driving the displays, and receiving the sensor signals.

Other advantages and novel features of the portable computer will become more apparent from the following detailed description of embodiments when taken in conjunction with the accompanying drawings, in which:

FIG 1 is an isometric view of a portable computer in accordance with an exemplary embodiment of the present invention, the portable computer including a controller module (not shown);

FIG. 2 is a schematic view of the controller module of the portable computer of FIG. 1; and

FIGs. 3 and 4 respectively show two using states of the portable computer of FIG 1.

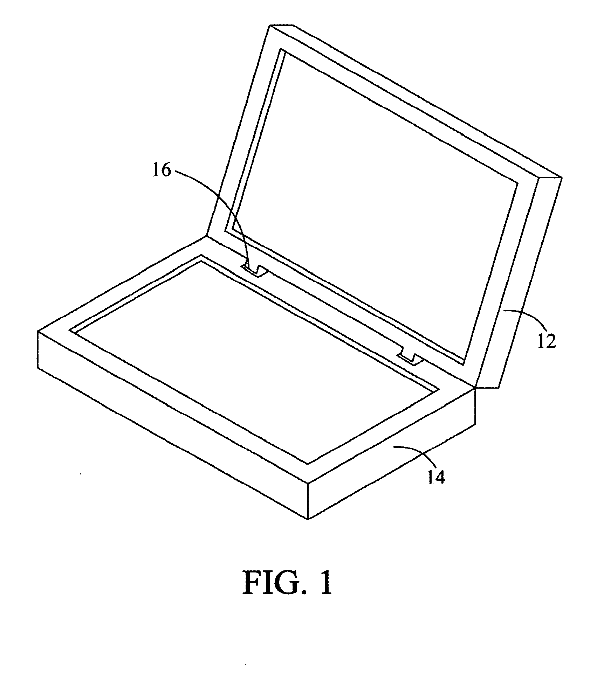

Referring to FIG. 1, a portable computer in accordance with an embodiment of the present invention includes a first display 12, a second display 14, and an interconnection portion 16. The interconnection portion 16 rotatably connects the first display 12 and the second display 14. Therefore, the first display 12 can be folded with the second display 14 for saving space.

The first and second displays 12, 14 are used for displaying data and images to users. As an example, when the portable computer displays a slideshow or video, the first and second displays 12, 14 can be used together as one display. Therefore, a rather large visual area can be obtained.

In an embodiment, one of the first and second displays 12, 14 is able to sense operations of users, and generate relative sensor signals according to the operations that are sensed. After an operating system and corresponding applications are installed in the portable computer, the first display 12 can be used for displaying interfaces of the operating system and the applications to users. For instance, when the portable computer is used for word processing, the first display 12 can be used for displaying a document, and the second display 14 can be used for displaying a keyboard interface. Users can touch the second display 14 at corresponding positions of the keys; thereby operations of the users are sensed by the second display 14. The second display 14 generates corresponding sensor signals accordingly. The sensor signals are processed and by the processors (not shown) shielded in the portable computer under the first and second displays 12, 14, and the processors convert the sensor signals to input commands. The second display 14 can display different keyboard interfaces with different key distributions when the portable computer is used in corresponding regions of the world.
In other embodiments, the second display 14 can display a handwriting panel. Handwriting operations of the users on the second display 14 are sensed and processed to be converted into input commands.

In another embodiment, both the first and the second displays 12, 14 are capable of sensing operations of the users, and generating sensor signals according to the sensed operations. The first and second displays 12, 14 can be either a touch panel or a kind of flexible display, such as E-paper.

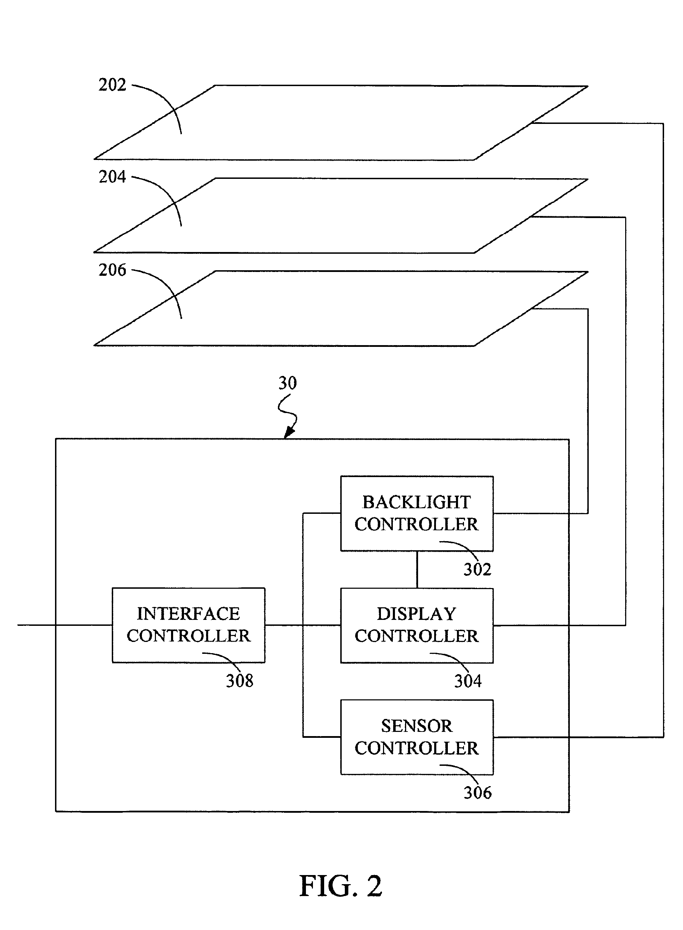

Referring to FIG. 2, the first or the second display 12, 14 which is capable of sensing operation of the users includes a sensor 202, a display panel 204, and a backlight panel 206. The portable computer further includes a controller module 30 for controlling the first and second displays 12, 14. The controller module 30 includes a backlight controller 302, a display controller 304, a sensor controller 306, and an interface controller 308.

The sensor 202 is connected to the sensor controller 306. The sensor 202 is used for sensing the operations, and generating the sensor signals according to the operations. The sensor signals are sent to the sensor controller 306. The sensor controller 306 is used for switching on or off the sensor 202, and adjusting a sensitivity of the sensor 202.

The display panel 204 and the backlight panel 206 are respectively connected to the display controller 304 and the backlight controller 302, for displaying data and images to users according to the control signals sent by the display controller 304 and the backlight controller 302. The backlight panel 206 is used for providing backlight for the display panel 204, like many commonly used display devices.

The interface controller 308 is used for transferring the sensor signals to other auxiliary components (not shown) of the portable computer, such as the processors, and receiving relative control signals sent from the auxiliary components to transfer them to the backlight controller 302, the display controller 304, or the sensor controller 306. For example, the interface controller 308 is able to receive display signals from signal sources, such as graphic cards, to transfer them to the display controller 304, for driving the first and second displays 12, 14 to display corresponding data and images to users.

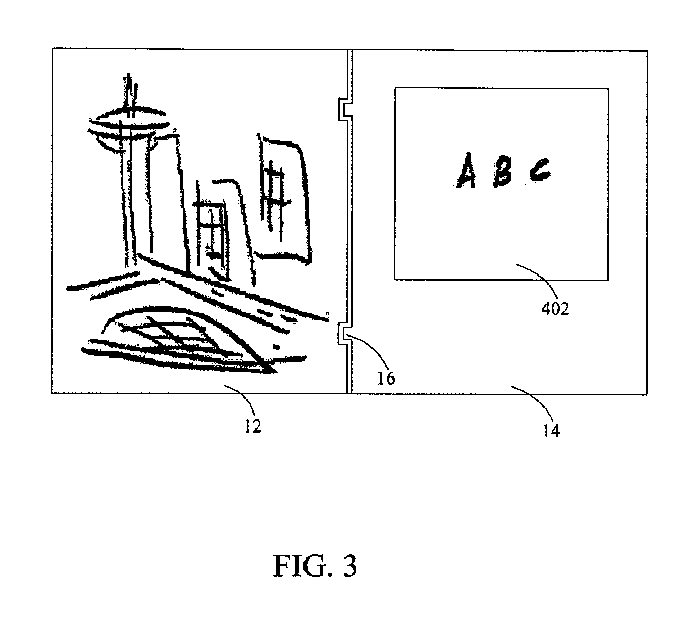

Referring also to FIG. 3, in use, the first display 12 is used for displaying images and characters to users, and the second display 14 is used for displaying a handwriting window 402 for users to write on. The handwriting operations of the users are sensed by the second display 14, and corresponding sensor signals are generated according to the handwriting operations. The sensor signals are processed by processors of the portable computer, thereby the handwriting operations are recognized, and relative input commands are generated accordingly.

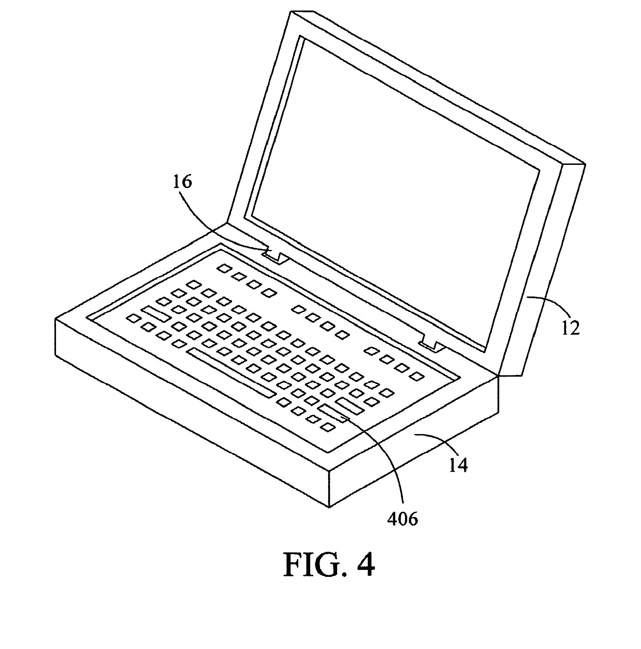

Referring to FIG. 4, in another use, the first display 12 can be used for displaying interfaces of the operating systems and applications to users. The second display 14 can display a keyboard interface 406 for users to key in commands or data that are sensed by the second display 14, and corresponding sensor signals are generated accordingly.

In other embodiments, the first and second displays 12, 14 are united for displaying an interface, such as a keyboard interface or a handwriting window to users. Meanwhile, the portable computer is connected to external displays for displaying corresponding images and data.

The embodiments were chosen and described in order to explain the principles of the invention and their practical application so as to enable others skilled in the art to utilize the invention and various embodiments and with various modifications as are suited to the particular use contemplated. Alternative embodiments will become apparent to those skilled in the art to which the present invention pertains without departing from its spirit and scope. Accordingly, the scope of the present invention is defined by the appended claims rather than the foregoing description and the exemplary embodiments described therein.

## Claims

1. A portable computer comprising:
a first display;
a second display, at least one of the first and second displays capable of sensing operations of users and generating sensor signals according to the operations;
an interconnection portion rotatably connecting the first display to the second display; and
a controller module used for receiving the sensor signals to drive the first display or the second display to display images and data according to the operations.

2. The portable computer as claimed in claim 1, wherein the display capable of sensing the operations comprises a sensor for sensing the operations and generating the sensor signals according to the operations that are sensed.

3. The portable computer as claimed in claim 1 or 2, wherein the display capable of sensing the operations further comprises a sensor controller connected to the sensor, for receiving the sensor signals and transferring the sensor signals to auxiliary elements of the portable computer.

4. The portable computer as claimed in claim 3, wherein the sensor controller is configured for switching on and/or off the sensor.

5. The portable computer as claimed in claim 3, wherein the sensor controller is used for adjusting the sensitivity of the sensor.

6. The portable computer as claimed in any preceding claim, wherein each of the first and second display comprises a display panel and a backlight panel respectively configured for displaying images and data and providing backlight for the display panel.

7. The portable computer as claimed in claim 6, wherein the controller module comprises a display controller and a backlight controller respectively configured for controlling the display panel and the backlight panel.

8. The portable computer as claimed in any preceding claim, wherein the controller module comprises an interface controller for receiving the sensor signals and transferring the sensor signals to auxiliary elements of the portable computer.

9. The portable computer as claimed in claim 8, wherein the interface controller receives source signals from the auxiliary elements of the portable computer and sends drive signals for driving the first and second displays according to the source signals.
